# EUROPÄISCHE PATENTSCHRIFT

(11) **EP 0 936 084 B1**
(45) Veröffentlichungstag und Bekanntmachung des Hinweises auf die Patenterteilung: **24.09.2003**
(21) Anmeldenummer: 98890352.2
(22) Anmeldetag: 01.12.1998
(51) Int. Cl.: B60B 39/00, B60B 39/08, B60B 39/10

(54) **Abdichtung für kolbengesteuerte Dosiereinrichtung bei Streugeräten**
Seal for a dispensing system actuated by a piston in spreading devices
Joint d'étanchéité pour dispositif de dosage commandé par un piston chez appareils de répandage

(30) Priorität: 16.02.1998 AT 26698
(43) Veröffentlichungstag der Anmeldung: 18.08.1999
(73) Patentinhaber: Goldmann, Norbert, 31008 Elze (DE); Bartling, Luise, 31008 Elze (DE)
(72) Erfinder: Goldman, Norbert, 31008 Elze (DE); Bartling, Werner, 31008 Elze (DE)
(74) Vertreter: Köhler-Pavlik, Johann, Dipl.-Ing.

(56) Entgegenhaltungen:
- EP-A- 0 025 203
- EP-A- 0 816 129
- AT-B- 394 169
- AT-B- 403 559

## Beschreibung

Die Erfindung betrifft eine Abdichtung für kolbengesteuerte Dosiereinrichtungen bei Streugeräten, mit welchen ein Streugut, insbesondere Sand oder andere Antirutschmaterialien vor die Räder von Fahrzeugen, wie z.B. Schienenfahrzeugen oder Lastkraftwagen gestreut wird.

Durch die AT 403 559 ist ein Streugerät dieser Art und nach dem Oberbegriff des Anspruchs 1 bekanntgeworden, welches mit einem Vorratsbehälter, einer Dosiereinrichtung und einer Austragseinrichtung versehen ist, wobei nach der Dosiereinrichtung eine, als Injektor ausgebildete druckluftbetätigte Förder- bzw. Austragseinrichtung zum Austragen des Streugutes vorgesehen ist, und die Austragseinrichtung ein Injektorgehäuse mit einem Zulauftrichter und einen daran anschließenden Kanal aufweist, dessen Achse schräg zur Längsachse einer in diesen mündenden Injektordüse verläuft, an welche in einem axialen Abstand ein Injektortrichter anschließt, wobei zwischen der Düse und dem Injektortrichter ein Injektorraum gebildet ist. Hiebei weist die Dosiereinrichtung eine Dosierkammer auf, deren Austrittsöffnung durch einen Dosierkolben abgeschlossen ist, welcher unter dem Einfluß einer Feder in Schließstellung gehalten wird. Zum Öffnen der Austrittsöffnung ist ein Hubmagnet vorgesehen, durch welchen der Dosierkolben entgegen der Kraft der Feder zurückgezogen werden kann. Bei diesem Streugerät erfolgt die axiale Kolbenabdichtung aus einem Filzabstreifer.

Aufgabe der Erfindung ist die Kolbenabdichtung zu verbessern und zwar sowohl in Hinblick auf die Wirkung der Kolbensteuerung als auch der Streuwirkung, insbesondere in einer druckluftbetätigten Sandstreuanlage vor allem solcher, die nach dem Injektorprinzip arbeitet, wie beispielsweise in der genannten AT 403 559 beschrieben ist. Diese Aufgabe wird durch die Maßnahme nach dem kennzeichnenden Teil des Patentanspruches 1 gelöst.

Bei dieser Lösung wird bei Anwendung der erfindungsgemäßen Abdichtung bei einer Streuanlage nach dem Injektorprinzip als weiterer Vorteil erzielt, daß durch die Injektorfunktionsweise auf den gesamten sandzuführenden Raum ein Unterdruck erzeugt wird, somit auch auf die axiale Kolbenabdichtung, wodurch ein besserer Wirkungsgrad gegenüber dem bekannten Streugerät erzielt wird.

Weitere Vorteile ergeben sich durch die Maßnahmen nach den Unteransprüchen.

In der Zeichnung ist ein Ausführungsbeispiel der erfindungsgemäßen Dosiereinrichtung für ein Streugerät dargestellt. Es zeigen Fig. 1 einen Längsschnitt durch die Dosiereinrichtung mit einer Austragseinrichtung bei geschlossenem Hubkolben, Fig. 2 einen Längsschnitt durch die Dosiereinrichtung bei offenem Hubkolben und Fig. 3 eine Ausführungsform des erfindungsgemäßen Dichtelementes im axialen Längsschnitt.

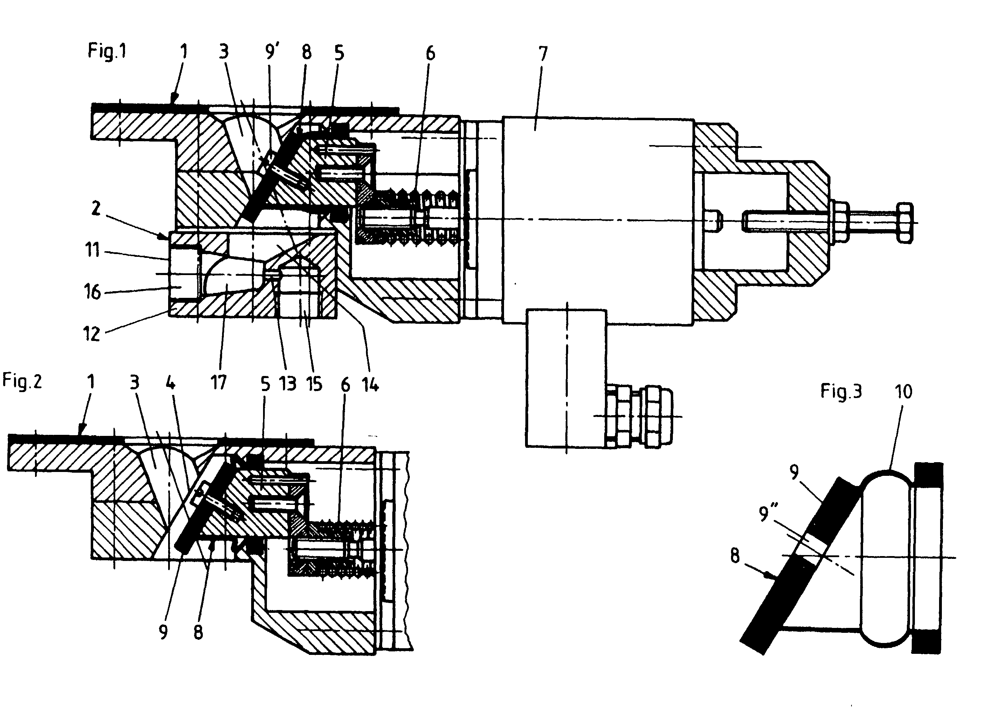

In den Figuren ist mit 1 eine Dosiereinrichtung bezeichnet, an welche eine Austragseinrichtung 2 anschließt. Die Dosiereinrichtung 1 kann beliebig ausgestaltet sein, z.B. nach der AT 394 169. Im vorliegenden Falle weist die Dosiereinrichtung 1 eine Dosierkammer 3 auf, in welche das Streugut aus einem nicht dargestellten Vorratsbehälter gelangt. Die Dosierkammer 3 besitzt eine Austrittsöffnung 4, welche durch einen Dosierkolben 5 abgeschlossen ist, solange das Streugut nicht zum Einsatz gelangen soll. Der Dosierkolben 5 ist in der in Fig. 1 dargestellten Schließstellung durch eine Feder 6 gehalten. Soll das Streugut zum Einsatz gebracht werden, wird der Dosierkolben 5 zum Öffnen der Austrittsöffnung 4 durch ein Hubelement 7, z. B. ein Hubmagnet entgegen der Kraft der Feder 6 zurückgezogen, wodurch die Austrittsöffnung 4, wie Fig. 2 zeigt, freigegeben wird.

Der Dosierkolben 5 ist an seinem der Dosierkammer 3 zugekehrten Ende von einem Dichtelement 8 umschlossen, welches vorzugsweise einteilig ausgeführt und in dieser Form als Ausführungsbeispiel in Fig. 3 dargestellt ist. Das Dichtelement 8 besteht aus einem chemisch und mechanisch beständigen gummiartigen Material und besitzt eine an den Rand der Austrittsöffnung 4 abdichtende Scheibe 9, an die ein in der bevorzugten Darstellung als ringförmiger, den Dosierkolben 5 umgebender Balg, vorzugsweise Faltenbalg 10 ausgebildeter Schlauch anschließt. Das Dichtelement 8, welches das der Austrittsöffnung 4 zugekehrte Ende des Dosierkolbens 5 umschließt, ist durch eine Schraube 9' am Dosierkolben 5 befestigt, welche durch eine mittige Öffnung 9" der Scheibe 9 in den Dosierkolben 5 eingeschraubt ist. Dadurch wird eine praktisch verschleißsichere Dichtung erzielt.

Die Austragseinrichtung 2, welche im vorliegenden Falle nach dem Injektorprinzip ähnlich einer Strahlpumpe arbeitet, besitzt einen Injektor 11 mit einem Injektorgehäuse 12 und einer Injektordüse 13, welche sich bei der vorliegenden Konstruktion in der Längsmitte des Injektorgehäuses 12 erstreckt. Durch einen Zulauftrichter 14 wird das Streugut aus der Dosierkammer 3 dem Injektor 11 zugeführt.

Die Luftzufuhr zur Injektordüse 13 erfolgt im vorliegenden Falle in radialer Richtung durch einen Kanal 15, wobei das Sand-Luftgemisch durch die Austrittsöffnung 16 in einen daran angeschlossenen Schlauch, eine Förderleitung od. dgl. ausgetragen und vor das gegen Rutschen zu sichernde Rad gebracht wird. Die eingeblasene Luft besorgt somit durch die Saugwirkung im Injektorraum 17 sowohl das Transportieren des Streugutes aus dem Vorratsbehälter in den Injektorraum 17 als auch die Förderung des Streugutes aus diesem über den angeschlossenen Schlauch od. dgl. beispielsweise zum Rad eines Fahrzeuges.

Durch die erfindungsgemäße Maßnahme wird auf den gesamten sandzuführenden Raum ein Unterdruck erzeugt, also auch auf die axiale Kolbenabdichtung, wobei das Dichtelement 8 eine im wesentlichen verschleißfreie, druckdichte räumliche Trennung zwischen sanddurchfließendem Raum und Kolben-Hubelement, welches als Hubmagnet, Hubzylinder od. dgl. ausgebildet sein kann, bewirkt.

## Patentansprüche

1. Abdichtung für kolbengesteuerte Dosiereinrichtungen bei Streugeräten mit einer Dosierkammer (3), deren Austrittsöffnung durch einen druckbelasteten Dosierkolben (5) abgeschlossen ist, welcher im Bedarfsfall gegen den auf ihn ausgeübten Druck durch eine Hubvorrichtung (7), z. B. einen Hubmagnet oder einen Hubzylinder von der Austrittsöffnung (4) der Dosierkammer abhebbar ist, wobei eine Dichtung (8) am der Austrittsöffnung der Dosierkammer zugekehrten Ende des Dosierkolbens vorgesehen ist, **dadurch gekennzeichnet, daß** die Abdichtung so gebildet ist, daß sie das der Austrittsöffnung (4) der Dosierkammer (3) zugekehrte Ende des Dosierkolbens (5) umschließt, und aus gummiartigem Material oder Kunststoff besteht.

2. Abdichtung nach Patentanspruch 1, **dadurch gekennzeichnet, daß** das Dichtungselement (8) als Balg (10) ausgebildet ist, welcher vorzugsweise ringförmig ausgebildet, den Dosierkolben (5) außenseitig umgibt.

3. Abdichtung nach Patentanspruch 2, **dadurch gekennzeichnet, daß** der Balg (10) als Faltenbalg ausgebildet ist.

4. Abdichtung nach mindestens einem der vorangehenden Patentansprüchen, **dadurch gekennzeichnet, daß** das Dichtungselement (8) einstückig ausgebildet ist.

## Claims

1. A sealing for piston-controlled metering means in sprinkling devices with a metering chamber (3) whose outflow opening is closed by a pressure-loaded metering piston (5), which metering piston, if required, can be lifted off the outflow opening (4) of the metering chamber by a lifting means (7), e.g. a lifting magnet or a lifting cylinder, against the pressure exerted upon the metering piston, a sealing (8) being provided at that end of the metering piston which faces the outflow opening of the metering chamber, **characterised in that** the sealing is formed such that it surrounds that end of the metering piston (5) which faces the outflow opening (4) of the metering chamber (3) and is formed of a rubber-like material or a synthetic material.

2. A sealing according to claim 1, **characterised in that** the sealing element (8) is designed as a bellows (10) which preferably has an annular shape and surrounds the metering piston (5) at the external side thereof.

3. A sealing according to claim 2, **characterised in that** the bellows (10) is designed as a concertina-type bellows.

4. A sealing according to at least one of the preceding claims, **characterised in that** the sealing element (8) is formed in one piece.

## Revendications

1. Joint d'étanchéité pour dispositifs de dosage commandé par piston pour des appareils d'épandage avec une chambre de dosage (3) dont l'ouverture de sortie est obturée par un piston de dosage (5) sous pression qui, en cas de besoin, peut être soulevé contre l'action de la pression exercée sur lui grâce à un dispositif de levage (7), par exemple un aimant de levage ou un piston de levage, de l'ouverture de sortie (4) de la chambre de dosage, un joint d'étanchéité (8) étant prévu au niveau de l'extrémité du piston de dosage orientée vers l'ouverture de sortie de la chambre de dosage, **caractérisé en ce que** le joint d'étanchéité est conçu de telle sorte qu'il entoure l'extrémité du piston de dosage (5) orientée du côté de l'ouverture de sortie (4) de la chambre de dosage (3), et **en ce qu'**il est constitué d'un matériau de type caoutchouc ou de matière plastique.

2. Joint d'étanchéité selon la revendication 1, **caractérisé en ce que** l'élément d'étanchéité (8) est conçu sous la forme d'un tuyau annelé (10), de préférence annulaire, qui entoure le piston de dosage (5) à l'extérieur.

3. Joint d'étanchéité selon la revendication 2, **caractérisé en ce que** le tuyau annelé (10) a la forme d'un soufflet.

4. Joint d'étanchéité selon au moins un des revendications précédentes, **caractérisé en ce que** l'élément d'étanchéité (8) est conçu d'une seule pièce.
